# EUROPEAN PATENT APPLICATION

(11) **EP 4 725 772 A1**
(43) Date of publication of application: **15.04.2026**
(21) Application number: 24852140.3
(22) Date of filing: 25.07.2024
(51) Int. Cl.: B60R 16/033, B60R 25/40, H01M 50/242, H01M 50/213, B60R 21/017, B60R 16/04

(54) **BACKUP BATTERY ASSEMBLY**

(30) Priority: 09.08.2023 KR 20230104405; 25.06.2024 KR 20240083044
(71) Applicant: LG Energy Solution, Ltd., Seoul 07335 (KR)
(72) Inventor: JANG, Jae Young, Daejeon 34122 (KR); YOO, Chi Gohn, Daejeon 34122 (KR)
(74) Representative: Plasseraud IP
(86) International application number: PCT/KR2024/010858
(87) International publication number: WO 2025/033784

(57) **Abstract**

The present disclosure relates to a backup battery assembly, and more specifically, to a backup battery assembly that supplies a current to a vehicle door lock to lock or unlock the vehicle door lock when the main power of the vehicle door lock is cut off. A backup battery assembly according to the present disclosure may include a backup battery that supplies a current to a vehicle door lock when the main power of the vehicle door lock is cut off, a backup battery case accommodating the backup battery, and a protection block installed inside the backup battery case to protect the backup battery, wherein the protection block may include a first end coupled to one side surface inside the backup battery case, a second end coupled to the other side surface inside the backup battery case, and a connection portion connecting the first end and the second end between the first end and the second end, wherein the cross-sectional area of the first end and the second end in the width direction of the backup battery case may be wider than the cross-sectional area of the connection portion in the first direction, and the protection block may be a rigid block made of SUS, aluminum, or steel.

## Description

### TECHNICAL FIELD

### CROSS-REFERENCE TO RELATED APPLICATIONS

The present application claims priority to Korean Patent Application No. 10-2023-0104405 filed on August 9, 2023 and Korean Patent Application No. 10-2024-0083044 filed on June 25, 2024 in the Republic of Korea, the disclosures of which are incorporated herein by reference.

### TECHNICAL FIELD

The present disclosure relates to a backup battery assembly, and more specifically, to a backup battery assembly that supplies a current to a vehicle door lock to unlock the vehicle door lock when the main power of the vehicle door lock is cut off.

### BACKGROUND ART

A rechargeable battery is a battery that can be charged and discharged, unlike a primary battery that cannot be recharged. A low-capacity rechargeable battery is used in small portable electronic devices such as mobile phones, laptop computers, and camcorders, and a large-capacity battery is widely used as a power source for driving motors in hybrid vehicles and the like.

In particular, a rechargeable battery may be used as a main power source to supply a current to an electronic door lock installed on a vehicle door to lock or unlock the vehicle door. In this case, when the main power is cut off, no current is supplied to the door lock, and thus there has been a problem that the vehicle door may not be locked or unlocked.

To solve this problem, in the prior art, a method of supplying a current to the vehicle door lock using a backup battery has been devised in a situation where it is impossible to supply a current to the vehicle door lock due to the main power being cut off.

However, when the backup battery case is impacted by a collision accident or the like occurring while the vehicle is travelling, there is a problem that the backup battery is damaged and cannot supply a current to the vehicle door lock. In particular, when the backup battery case is impacted by a collision accident or the like occurring while the vehicle is travelling, there is a problem in which the user is trapped inside the accident vehicle as the vehicle door cannot be unlocked due to damage to the backup battery.

### SUMMARY

### TECHNICAL PROBLEM

The present disclosure is designed to solve the above problem, and therefore the present disclosure is directed to providing a backup battery assembly capable of supplying a current to a vehicle door lock by preventing the backup battery from being damaged even when the backup battery case is broken by an external impact.

### TECHNICAL SOLUTION

A backup battery assembly according to the present disclosure may include a backup battery that supplies a current to a vehicle door lock when the main power of the vehicle door lock is cut off; a backup battery case accommodating the backup battery; and a protection block installed inside the backup battery case to protect the backup battery, wherein the protection block may include a first end coupled to one side surface inside the backup battery case; a second end coupled to the other side surface inside the backup battery case; and a connection portion connecting the first end and the second end between the first end and the second end, wherein the cross-sectional area of the first end and the second end in the width direction (hereinafter, first direction) of the backup battery case may be wider than the cross-sectional area of the connection portion in the first direction, and the protection block may be a rigid block made of SUS, aluminum, or steel.

The cross-sectional area of the first end in the first direction may increase as it goes from the connection portion side toward one side surface inside the backup battery case, and the cross-sectional area of the second end in the first direction may increase as it goes from the connection portion side toward the other side surface inside the backup battery case.

The cross-sectional area of the connection portion in the first direction may be constant.

The shapes of the first end and the second end may be symmetrical with respect to the connection portion.

The backup battery may be a cylindrical battery formed by extending in the length direction of the backup battery case.

The length of the protection block in the height direction (hereinafter, second direction) of the backup battery case may be longer than the diameter of the backup battery.

The length of the connection portion in the second direction may be shorter than the diameter of the backup battery.

The backup battery case may include a backup battery seating portion in which the backup battery is seated.

The backup battery seating portion may include a first seating portion installed on one side surface inside the backup battery case; and a second seating portion installed on the other side surface inside the backup battery case.

A curved seating surface corresponding to the side surface shape of the backup battery may be formed on each of the first seating portion and the second seating portion.

The backup battery case may be made of an insulating material.

A plurality of backup batteries may be installed inside the backup battery case along the width direction of the backup battery case, and the protection block may be installed between each of the backup batteries.

Meanwhile, one backup battery may be installed inside the backup battery case, and the protection blocks may be installed at both sides of the backup battery along the width direction of the backup battery case.

Additionally, a plurality of protection blocks may be installed inside the backup battery case along the width direction of the backup battery case, and the backup battery may be installed between each of the protection blocks.

A hollow space may be formed inside at least one of the first end and the second end.

The width of the hollow space formed inside the first end may be narrower as it approaches the connection portion.

The width of the hollow space formed inside the second end may be narrower as it approaches the connection portion.

### ADVANTAGEOUS EFFECTS

The backup battery assembly according to the present disclosure has an advantageous effect of supplying a current to the vehicle door lock by preventing the backup battery from being damaged even when the backup battery case is broken by an external impact, as it is installed inside the backup battery case, has a wide cross-sectional area at the upper and lower ends, and includes a protection block made of a rigid material such as SUS, aluminum, or steel.

In particular, the backup battery assembly according to the present disclosure has an advantageous effect of minimizing the magnitude of the external force transmitted to the backup battery even when an impact is applied to the backup battery case, as the height of the protection block installed inside the backup battery case is formed longer than the diameter of the backup battery having a cylindrical shape.

Additionally, the backup battery assembly according to the present disclosure has an advantageous effect of preventing the backup battery from shaking even when an impact is applied to the backup battery case, as it includes a backup battery seating portion in which the backup battery is seated.

### BRIEF DESCRIPTION OF THE DRAWINGS

FIG. 1 is a perspective view showing a backup battery assembly according to Embodiment 1 of the present disclosure.
FIG. 2 is a cross-sectional view taken along the line A-A of FIG. 1.
FIG. 3 is a cross-sectional view showing a backup battery assembly according to Embodiment 2 of the present disclosure.
FIG. 4 is a cross-sectional view showing a backup battery assembly according to Embodiment 3 of the present disclosure.
FIG. 5 is a perspective view showing a backup battery assembly according to Embodiment 4 of the present disclosure.
FIG. 6 is a cross-sectional view taken along the line B-B of FIG. 5.
FIG. 7 is a cross-sectional view showing a backup battery assembly according to Embodiment 5 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a separator connection system according to the present disclosure will be described with reference to the drawings.

### Embodiment 1

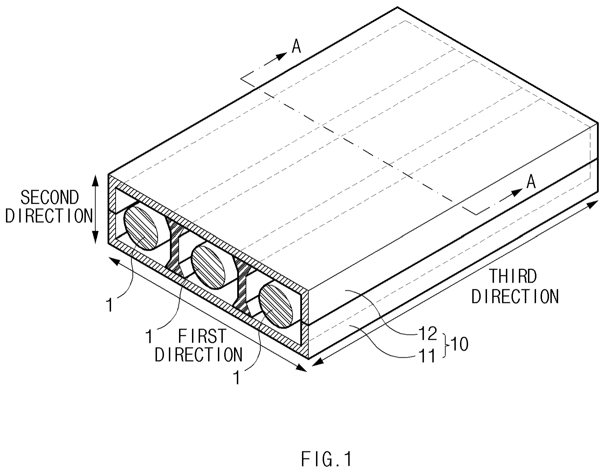

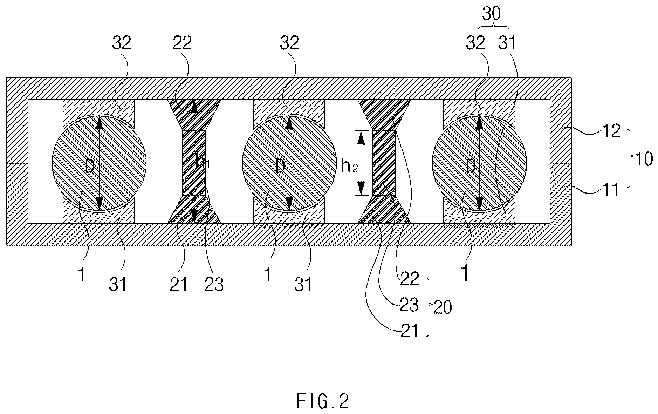

FIG. 1 is a perspective view showing a backup battery assembly according to Embodiment 1 of the present disclosure, and FIG. 2 is a cross-sectional view taken along the line A-A of FIG. 1.

Referring to FIGS. 1 and 2, a backup battery assembly according to the present disclosure includes a backup battery 1 that supplies a current to a vehicle door lock when the main power of the vehicle door lock is cut off, a backup battery case 10 accommodating the backup battery 1, and a protection block 20 installed inside the backup battery case 10 to protect the backup battery 1. Here, the protection block 20 includes a first end 21 coupled to one side surface inside the backup battery case 10, a second end 22 coupled to the other side surface inside the backup battery case 10, and a connection portion 23 connecting the first end 21 and the second end 22 between the first end 21 and the second end 22, wherein the cross-sectional area of the first end 21 and the second end 22 in the width direction (hereinafter, first direction) of the backup battery case 10 may be formed wider than the cross-sectional area of the connection portion 23 in the first direction.

Specifically, since the cross-sectional area of the first end 21 and the second end 22 of the protection block 20 in the first direction is formed wider than the cross-sectional area of the connection portion 23 in the first direction, the protection block 20 is formed relatively thick in the portion that directly contacts the backup battery case 10. In this case, the protection block 20 may effectively absorb the impact applied to the backup battery case 10, thereby effectively protecting the backup battery even when the backup battery case 10 is impacted by a vehicle collision accident or the like.

Additionally, according to the above structure of the protection block 20, in the backup battery installation space formed between two neighboring protection blocks 20, the distance between two neighboring connection portions 23 is greater than the distance between two neighboring first ends 21 or two neighboring second ends 22. That is, the backup battery installation space has a wide center area, and thus the backup battery 1 may be installed in the center area that is not adjacent to the backup battery case 10. In this case, since a predetermined gap may exist between the backup battery case 10 and the backup battery 1, the amount of impact transmitted to the backup battery 1 may be minimized even when an external impact is applied to the backup battery case 10.

This protection block 20 may be a rigid block that is not easily destroyed by an external force. The rigid block may be made of SUS, aluminum, or steel. The rigid block made of SUS has an advantageous effect of having high corrosion resistance and high processability, and the rigid block made of aluminum has an advantageous effect of having good formability and light weight. Additionally, the rigid block made of steel has an advantageous effect of having excellent durability due to its high tensile strength and yield strength.

Meanwhile, the cross-sectional area of the first end 21 in the first direction may increase as it goes from the connection portion 23 side toward one side surface inside the backup battery case 10, and the cross-sectional area of the second end 22 in the first direction may increase as it goes from the connection portion 23 side toward the other side surface inside the backup battery case 10. That is, the protection block 20 may include the first end 21 and the second end 22 in which the cross-sectional area thereof in the first direction increases as it goes toward both ends.

In this case, since the thickness of the first end 21 and the second end 22 gradually increases from the center toward both ends, a step in which the thickness changes sharply is not formed at the first end 21 and the second end 22. According to the above structure of the protection block 20, a step in which stress is concentrated is not formed at the first end 21 and the second end 22, and thus there is an advantageous effect that the first end 21 and the second end 22 are not easily broken even when an external force is transmitted to the protection block 20.

Even when the cross-sectional areas of the first end 21 and the second end 22 in the first direction increase as they go toward one side surface and the other side surface inside the backup battery case 10, respectively, the cross-sectional area of the connection portion 23 in the first direction may remain constant. In this case, no step is formed in the connection portion 23, and thus there is an advantageous effect that the connection portion 23 is not easily broken even when an external force is transmitted to the protection block 20.

The thickness of each of the first end 21 and the second end 22 gradually increases as it goes from the connection portion 23 side toward both ends, the thickness of the connection portion 23 remains constant, and the thickness of the portion of the first end 21 and the second end 22 adjacent to the connection portion 23 may be formed to be substantially the same as the thickness of the connection portion 23. In this case, no step is formed on the entire protection block 20, and thus there is an advantageous effect that the protection block 20 is not easily broken even when an external force is transmitted to the protection block 20.

Meanwhile, the backup battery case 10 may be composed of a first case 11 and a second case 12. There is no particular limitation on a coupling method for the first case 11 and the second case 12, and a protrusion and a groove are formed in each of the first case 11 and the second case 12, so that the first case 11 and the second case 12 may be fitted together. On the other hand, the first case 11 and the second case 12 may also be integrally coupled by soldering.

The first end 21 and the second end 22 may have a symmetrical shape with respect to the connection portion 23. Specifically, the first end 21 and the second end 22 may be symmetrically formed along the height direction (hereinafter, second direction) of the backup battery case 1 with respect to the connection portion 23.

On the other hand, there is no particular limitation on the shape and type of the backup battery 1 installed in the above-described backup battery installation space. For example, the backup battery 1 may be a cylindrical battery formed by extending in the length direction (hereinafter, third direction) of the backup battery case.

The length h1 of the protection block 20 in the second direction may be longer than the diameter D of the backup battery 1. That is, some gap may exist between the backup battery case 10 and the backup battery 1. In this case, even when an external impact due to a vehicle collision accident or the like is applied to the backup battery case 10, the impact is not directly transmitted to the backup battery 1, and thus there is an advantageous effect of minimizing damage to the backup battery 1 due to the external impact.

The length h2 of the connection portion 23 in the second direction may be shorter than the diameter D of the backup battery 1. Here, the diameter D of the backup battery 1 is formed to be shorter than the length h1 of the entire protection block 20 in the second direction and longer than the length h2 of the connection portion 23 in the second direction, so that the backup battery 1 may sufficiently fill the backup battery installation space while maintaining a certain distance from the backup battery case 10. In this case, there is an advantageous effect of preventing an external impact from being directly transmitted to the backup battery 1 and simultaneously maximizing the capacity of the backup battery 1.

Meanwhile, the backup battery case 10 may include a backup battery seating portion 30 in which the backup battery 1 is seated. Specifically, the backup battery seating portion 30 may include a first seating portion 31 installed on one side surface inside the backup battery case 10 and a second seating portion 32 installed on the other side surface inside the backup battery case 10.

Specifically, the backup battery case 10 may include a first seating portion 31 and a second seating portion 32 installed on one side surface and the other side surface of the backup battery 1, respectively, to seat the backup battery 1. In this case, the backup battery 1 is seated in a fixed position inside the backup battery case 10, and thus it is possible to prevent the backup battery 1 from leaving the installation position when an external impact is transmitted to the backup battery case 10.

Additionally, since each of the first seating portion 31 and the second seating portion 32 is installed between the backup battery 1 and the backup battery case 10, they may function as buffering members that buffer the external impact transmitted to the backup battery case 10 before reaching the backup battery 1.

That is, the first seating portion 31 and the second seating portion 32 may be configured to determine the position of the backup battery 1 and support the backup battery 1. Here, the protection block 20 prevents the backup battery 1 from being damaged when an external impact is applied to the backup battery case 10, and may be configured to be unrelated to the positioning of the backup battery 1 and the support of the backup battery 1.

Each of the first seating portion 31 and the second seating portion 32 may include a seating surface corresponding to the shape of the backup battery 1. Here, when the backup battery 1 is a cylindrical battery, the seating surfaces formed on each of the first seating portion 31 and the second seating portion 32 may include a curved surface corresponding to the side surface of the cylindrical battery. Meanwhile, the backup battery case 10 may be made of an insulating material. In this case, there is an advantageous effect of protecting electronic components installed around the backup battery case 10 by preventing static electricity or the like generated in the backup battery 1 from leaking out of the backup battery case 10.

The backup battery assembly may have a backup battery case 10 made of an insulating material and a protection block 20 made of SUS, aluminum, or steel. In this case, the backup battery assembly may be manufactured by a double injection process in which the protection block 20 is firstly injected and then the backup battery case 10 is secondly injected.

Here, the first injection process is a process of injecting the protection block 20 using a mold, and the second injection process is a process of injecting the backup battery case 10 on top of the protection block 20 firstly injected using a new mold. The backup battery case 10 may include a first case 11 and a second case 12, and thus the second injection process may be a process of injecting the first case 11 and the second case 12, respectively, on top of the protection block 20 firstly injected.

In this way, when the double injection method is utilized in the manufacture of the backup battery assembly, the protection block 20 is bonded to the backup battery case 10, which creates no gap between the protection block 20 and the backup battery case 10, thereby having an advantageous effect of increasing the durability of the product. Moreover, a mold is used in the double injection method, which is suitable for mass production of the product, thereby having an advantageous effect of improving the productivity of the backup battery assembly.

Additionally, the backup battery case 10 may have a form in which an insulating material is coated on a body made of SUS, aluminum, or steel. In this case, the backup battery case 10 may secure high rigidity while preventing static electricity or the like generated in the backup battery 1 from leaking out of the backup battery case 10.

Here, the insulating material may be coated on the body through various methods. For example, a powder coating process may be used to coat the body with the insulating material.

Meanwhile, as shown in FIGS. 1 and 2, a plurality of backup batteries 1 are installed inside the backup battery case 10 along the width direction (first direction) of the backup battery case, and the protection block 20 may be installed between each of the backup batteries 1. In this case, the backup batteries 1 and the protection blocks 20 are installed alternately along the first direction inside the backup battery case 10, and thus there is an advantageous effect of effectively protecting a plurality of backup batteries 1 accommodated inside the backup battery case 10.

Additionally, according to the above structure of the backup battery assembly, the protection block 20 is installed between each of the backup batteries 1, and thus the backup batteries 1 should be spaced apart so that the protection block 20 having sufficient rigidity may be installed between them. Here, there is no particular limitation on the spacing between the backup batteries 1. For example, the spacing between the backup batteries 1 may exceed 2 mm so that the protection block 20 having a thickness of 2 mm or more in the first direction may be installed between the backup batteries 1.

### Embodiment 2

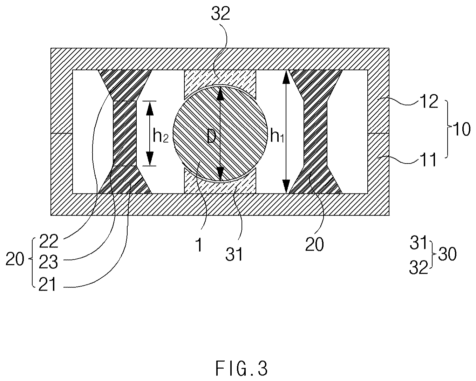

FIG. 3 is a cross-sectional view showing a backup battery assembly according to Embodiment 2 of the present disclosure.

Embodiment 2 of the present disclosure differs from Embodiment 1 in that only one backup battery 1 is included inside the backup battery case 10. The contents common to Embodiment 1 will be omitted as much as possible, and Embodiment 2 will be described focusing on the differences. That is, it is obvious that the contents not described in Embodiment 2 may be considered as the contents of Embodiment 1 if necessary.

Referring to FIG. 3, one backup battery 1 may be installed inside the backup battery case 10, and the protection block 20 may be installed at both sides of the backup battery 1 along the width direction (first direction) of the backup battery case 10. One backup battery 1 is installed in the backup battery case 10, and thus a miniaturization of the backup battery assembly is possible. In this case, even when the structure of the vehicle door lock is complicated or the installation space inside the vehicle door lock is insufficient, the backup battery assembly may be easily installed. Additionally, the protection blocks 20 are installed at both sides of the backup battery assembly 1 in the first direction, and thus the backup battery 1 may be effectively protected even when an impact caused by a vehicle collision accident or the like is transmitted to the backup battery case 10.

Meanwhile, the protection blocks 20 are installed between the backup battery 1 and the backup battery case 10, and thus the spacing between the backup battery 1 and the backup battery case 10 should be spaced apart so that the protection blocks 20 having sufficient rigidity may be installed. For example, the spacing between the backup battery 1 and the backup battery case 10 may exceed 2 mm so that the protection block 20 having a thickness of 2 mm or more in the first direction may be installed between the backup battery 1 and the backup battery case 10.

### Embodiment 3

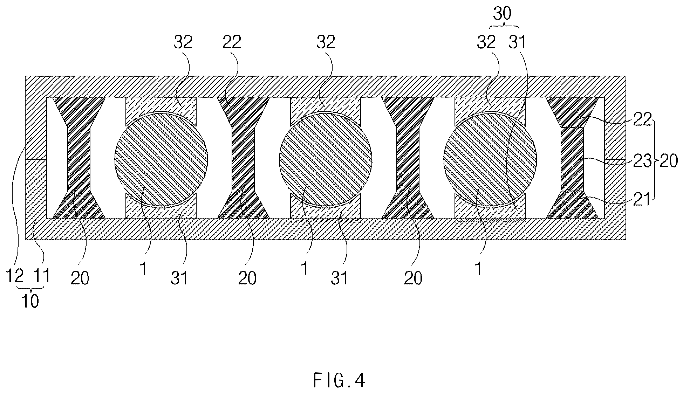

FIG. 4 is a cross-sectional view showing a backup battery assembly according to Embodiment 3 of the present disclosure.

Embodiment 3 of the present disclosure differs from Embodiments 1 and 2 in that a plurality of backup batteries 1 are included inside the backup battery case 10 and protection blocks 20 are installed at both sides of all the backup batteries 1. The contents common to Embodiments 1 and 2 will be omitted as much as possible, and Embodiment 3 will be described focusing on the differences. That is, it is obvious that the contents not described in Embodiment 3 may be considered as the contents of Embodiments 1 and 2 if necessary.

Referring to FIG. 4, a plurality of protection blocks 20 may be installed inside the backup battery case 10 along the width direction (first direction) of the backup battery case 10, and the backup battery 1 may be installed between each of the protection blocks 20. In this case, the protection blocks 20 may be installed at both sides of all the backup batteries 1 included in the backup battery case 10 in the first direction, and thus even when an impact caused by a vehicle collision accident or the like is transmitted to the backup battery case 10, the protection effect of all the backup batteries 1 installed in the backup battery case 10 may be maximized.

### Embodiment 4

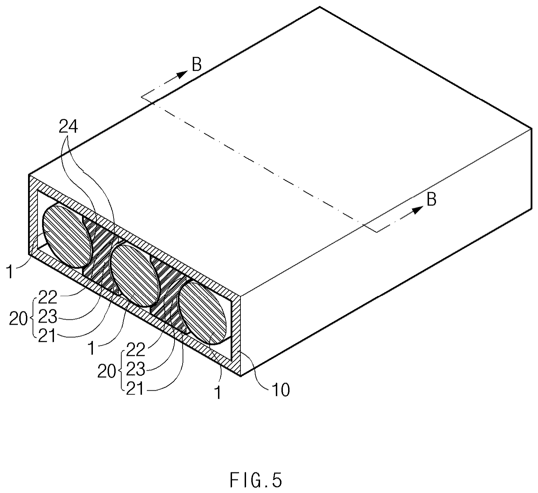

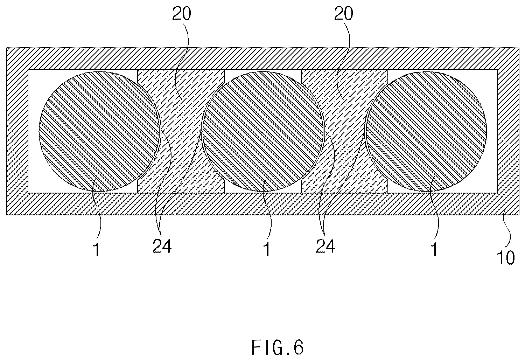

FIG. 5 is a perspective view showing a backup battery assembly according to Embodiment 4 of the present disclosure, and FIG. 6 is a cross-sectional view taken along the line B-B of FIG. 5.

Embodiment 4 of the present disclosure differs from Embodiments 1 to 3 in that a seating groove 24 where the backup battery 1 is seated is formed in the connection portion 23 of the protection block 20. The contents common to Embodiments 1 to 3 will be omitted as much as possible, and Embodiment 4 will be described focusing on the differences. That is, it is obvious that the contents not described in Embodiment 4 may be considered as the contents of Embodiments 1 to 3 if necessary.

Referring to FIGS. 5 and 6, a seating groove 24 where the backup battery 1 is seated is formed in the connection portion 23 of the protection block 20. Here, the seating groove 24 is formed to correspond to the shape of the backup battery 1, and the backup battery 1 may be stably accommodated in the seating groove 24.

According to the above structure of the protection block 20, even when an external force is transmitted to the backup battery case 10 due to a vehicle collision or the like, the protection block 20 absorbs the impact, and thus there is an advantageous effect of preventing damage to the backup battery 1. Additionally, according to the above structure of the protection block 20, even when the backup battery case 10 is shaken by an external impact, the backup battery 1 is stably accommodated in the seating groove 24, and thus there is an advantageous effect of preventing the backup battery 1 from moving inside the battery case 10 due to an external impact.

Meanwhile, the backup battery 1 is a cylindrical battery formed by extending in the length direction (third direction) of the backup battery case 10, and the seating groove 24 may be an arc-shaped groove in which the side surface of the cylindrical battery is seated. Therefore, due to the shape of the seating groove 24 as described above, the connection portion 23 may be formed to be the thinnest in the center portion and may be thicker toward the upper and lower sides. In particular, the thickness of each of the upper and lower ends of the connection portion 23 may be formed substantially the same as the thickness of the second end 22 and the first end 21 described above. According to the above structure of the protection block 20, there is an advantageous effect of stably accommodating the backup battery 1, which is a cylindrical battery, inside the battery case 10.

An insulating coating layer for insulation from the backup battery 1 may be formed on the outer surface of the protection block 20. Here, the insulating coating layer may be coated on the body in various ways. For example, an insulating coating layer may be coated on the protection block 20 through a powder coating process. In this case, the insulating coating layer prevents static electricity or the like generated in the backup battery 1 from leaking out to the outside, and thus there is an advantageous effect of protecting electronic components installed around the backup battery case 10.

### Embodiment 5

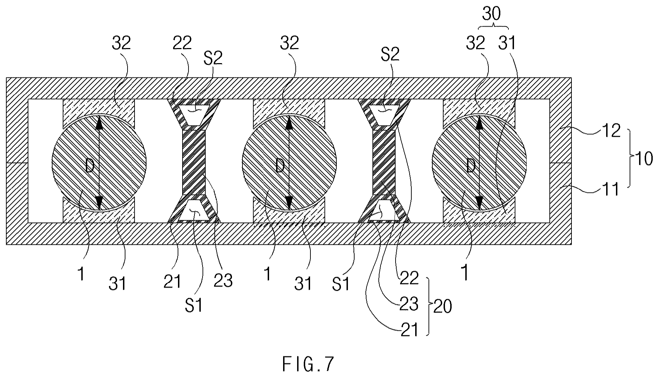

FIG. 7 is a cross-sectional view showing a backup battery assembly according to Embodiment 5 of the present disclosure.

Embodiment 5 of the present disclosure differs from Embodiments 1 to 4 in that a hollow space S is formed inside at least one of the first end 21 and the second end 22 of the protection block 20. The contents common to Embodiments 1 to 4 will be omitted as much as possible, and Embodiment 5 will be described focusing on the differences. That is, it is obvious that the contents not described in Embodiment 5 may be considered as the contents of Embodiments 1 to 4 if necessary.

Referring to FIG. 7, hollow spaces S1, S2 may be formed inside at least one of the first end 21 and the second end 22 of the protection block 20. The first end 21 and the second end 22 are made of SUS, aluminum, or steel, and the cross-sectional area of the protection block 20 in the horizontal direction is relatively wide, so that the rigidity thereof may be sufficiently secured even when hollow spaces S1, S2 are formed inside the first end 21 and the second end 22.

Therefore, even when hollow spaces S1, S2 are formed inside the first end 21 and the second end 22, the protection block 20 may sufficiently withstand an impact transmitted from the outside, and may prevent the external impact from being directly transmitted to the backup battery 1 and damaging the backup battery 1. Additionally, when hollow spaces S1, S2 are formed inside the first end 21 and the second end 22, the weight of the protection block 20 is reduced, and thus there is an advantageous effect of increasing the overall energy density of the backup battery assembly.

On the other hand, the width of the hollow space S1 formed inside the first end 21 may be narrower as it goes upward, and the width of the hollow space S2 formed inside the second end 22 may be narrower as it goes downward. That is, the widths of the hollow spaces S1, S2 formed inside the first end 21 and the second end 22, respectively, may be narrower as they approach the connection portion 22.

The hollow space S1 formed inside the first end 21 and the hollow space S2 formed inside the second end 22 may have a vertically symmetrical structure with respect to the connection portion 23. Additionally, although not shown in FIG. 7, the boundary surfaces of the hollow spaces S1, S2 may both be formed as curved surfaces.

In this case, no sharp edges are formed inside the first and second ends 21, 22, and thus, even when an external impact is applied to the protection block 20, there is no area where stress is concentrated in the hollow spaces S1, S2 inside the first and second ends 21, 22. Therefore, there is an advantageous effect of preventing the first and second ends 21, 22 from being broken due to the concentrated stress.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 1: | Backup battery | 10: | Backup battery case |
| 11: | First case | 12: | Second case |
| 20: | Protection block | 21: | First end |
| 22: | Second end | 23: | Connection portion |
| 24: | Seating groove | 30: | Backup battery seating portion |
| 31: | First seating portion | 32: | Second seating portion |
| D: | Diameter of backup battery | S1, S2: | Hollow space |
| h1: | Length of protection block in second direction | h2: | Length of connection portion in second direction |

## Claims

1. A backup battery assembly comprising:
a backup battery that supplies a current to a vehicle door lock when the main power of the vehicle door lock is cut off;
a backup battery case accommodating the backup battery; and
a protection block installed inside the backup battery case to protect the backup battery,
wherein the protection block comprises:
a first end coupled to one side surface inside the backup battery case;
a second end coupled to the other side surface inside the backup battery case; and
a connection portion connecting the first end and the second end between the first end and the second end,
wherein the cross-sectional area of the first end and the second end in the width direction (hereinafter, a first direction) of the backup battery case is wider than the cross-sectional area of the connection portion in the first direction, and
the protection block is a rigid block made of SUS, aluminum, or steel.

2. The backup battery assembly according to claim 1,
wherein the cross-sectional area of the first end in the first direction increases as it goes from the connection portion side toward the one side surface inside the backup battery case, and
the cross-sectional area of the second end in the first direction increases as it goes from the connection portion side toward the other side surface inside the backup battery case.

3. The backup battery assembly according to claim 2,
wherein the cross-sectional area of the connection portion in the first direction is constant.

4. The backup battery assembly according to claim 2,
wherein the shapes of the first end and the second end are symmetrical with respect to the connection portion.

5. The backup battery assembly according to claim 4,
wherein the backup battery is a cylindrical battery formed by extending in the length direction of the backup battery case.

6. The backup battery assembly according to claim 5,
wherein the length of the protection block in the height direction (hereinafter, second direction) of the backup battery case is longer than a diameter of the backup battery.

7. The backup battery assembly according to claim 6,
wherein the length of the connection portion in the second direction is shorter than the diameter of the backup battery.

8. The backup battery assembly according to claim 4,
wherein the backup battery case comprises a backup battery seating portion in which the backup battery is seated.

9. The backup battery assembly according to claim 8,
wherein the backup battery seating portion comprises:
a first seating portion installed on the one side surface inside the backup battery case;
and
a second seating portion installed on the other side surface inside the backup battery case.

10. The backup battery assembly according to claim 9,
wherein a curved seating surface corresponding to the side surface shape of the backup battery is formed on each of the first seating portion and the second seating portion.

11. The backup battery assembly according to claim 1,
wherein the backup battery case is made of an insulating material.

12. The backup battery assembly according to claim 1,
wherein a plurality of backup batteries are installed inside the backup battery case along the width direction of the backup battery case, and
the protection block is installed between each of the backup batteries.

13. The backup battery assembly according to claim 1,
wherein one backup battery is installed inside the backup battery case, and
the protection blocks are installed at both sides of the backup battery along the width direction of the backup battery case.

14. The backup battery assembly according to claim 1,
wherein a plurality of protection blocks are installed inside the backup battery case along the width direction of the backup battery case, and
the backup battery is installed between each of the protection blocks.

15. The backup battery assembly according to claim 1,
wherein a seating groove where the backup battery is seated is formed in the connection portion.

16. The backup battery assembly according to claim 15,
wherein the backup battery is a cylindrical battery formed by extending in the length direction of the backup battery case, and
the seating groove is an arc-shaped groove where the side surface of the cylindrical battery is seated.

17. The backup battery assembly according to claim 18,
wherein an insulating coating layer is formed on the surface of the protection block.

18. The backup battery assembly according to claim 1,
wherein a hollow space is formed inside at least one of the first end and the second end.

19. The backup battery assembly according to claim 18,
wherein the width of the hollow space formed inside the first end is narrower as it approaches the connection portion.

20. The backup battery assembly according to claim 18,
wherein the width of the hollow space formed inside the second end is narrower as it approaches the connection portion.
